# EUROPÄISCHE PATENTANMELDUNG

(11) **EP 2 112 413 A1**
(43) Veröffentlichungstag der Anmeldung: **28.10.2009**
(21) Anmeldenummer: 08169981.1
(22) Anmeldetag: 26.11.2008
(51) Int. Cl.: F16L 3/11, F16L 3/133, F16L 3/14, H02G 3/30, F16L 3/10, H02G 3/32

(54) **Rohrschelle**

(30) Priorität: 25.04.2008 CH 6532008; 01.06.2008 EP 08157379
(71) Anmelder: Zurecon AG, 8003 Zürich (CH)
(72) Erfinder: Pfluger, Gerd, CH-4625, Oberbuchsiten (CH)
(74) Vertreter: Rutz & Partner

(57) **Zusammenfassung**

Die für die Installation von Leitungen (2), insbesondere Rohren, vorgesehene Rohrschelle (1) umfasst ein ein- oder mehrteiliges Systemelement (11), das ein der Montage der Rohrschelle (1) dienendes Montageteil (112), ein Aufnahmeteil (111) mit einem ersten und einem zweiten Endstück (1112; 1113) sowie ein Abschlusselement (12) aufweist, das dem Halten der in das Aufnahmeteil (111) eingelegten Leitung (2) dient und dazu mit dem Systemelement (11) verbindbar ist. Erfindungsgemäss ist das Aufnahmeteil (111) vorzugsweise aus einer dünnen Metallplatte ausgestanzt und derart gebogen, dass ein der Aufnahme der installierten Leitung (2) dienendes V-förmiges Aufnahmesegment (1111) gebildet wird, das über das erste Endstück (1113) mit dem Montageteil (112) verbunden ist, welches wenigstens zweimal in dieselbe Richtung um vorzugsweise 90° abgewinkelt ist, und dadurch ein vorzugsweise senkrecht zum Aufnahmeteil (111) verlaufendes, und mit wenigstens einem ersten Montageelement (31) versehenes erstes Montageteilstück (1121) und ein daran anschliessendes mit wenigstens einem zweiten Montageelement (32) versehenes zweites Montageteilstück (1122) aufweist.

## Beschreibung

Die Erfindung betrifft eine der Installation von Leitungen, insbesondere Rohren dienende Rohrschelle nach dem Oberbegriff des Patentanspruchs 1.

Für die Zuführung und Verteilung von Medien wie Elektrizität, Gas, Wasser, Fernwärme, Telefon, Kabel TV in Bauten werden Installations- und Montagevorrichtungen verwendet, wie sie in [1], Produktkatalog der LANZ OENSINGEN AG, April 2003 gezeigt und beschrieben sind. Beispielsweise werden von Trägern oder Stützen gehaltene Kabelkanäle oder Gitterbahnen verwendet, in welche die zu installierenden Rohre, Leitungen und Kabel eingelegt werden.

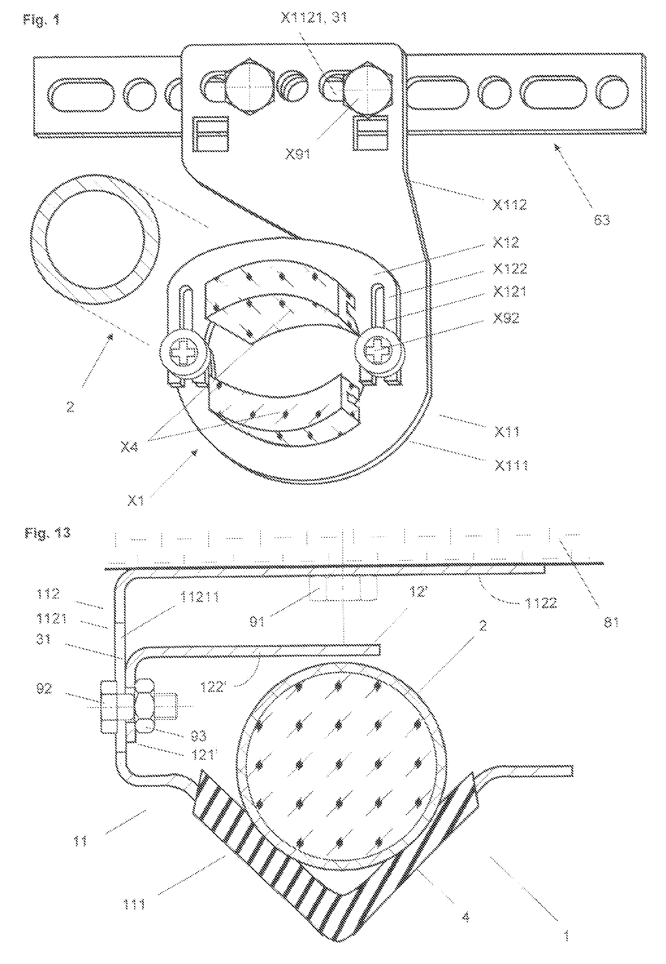

Zur Installation einzelner Rohre und Leitungen werden Rohrschellen verwendet, wie sie in [1], Seiten 60-65 beschrieben und nachstehend in den Figuren 1 bis 3 im Detail dargestellt sind. Rohrschellen dieser Art werden an Trägern, Stützen, Auslegern, Profilteilen oder direkt an einer Wand oder der Decke eines Raumes montiert.

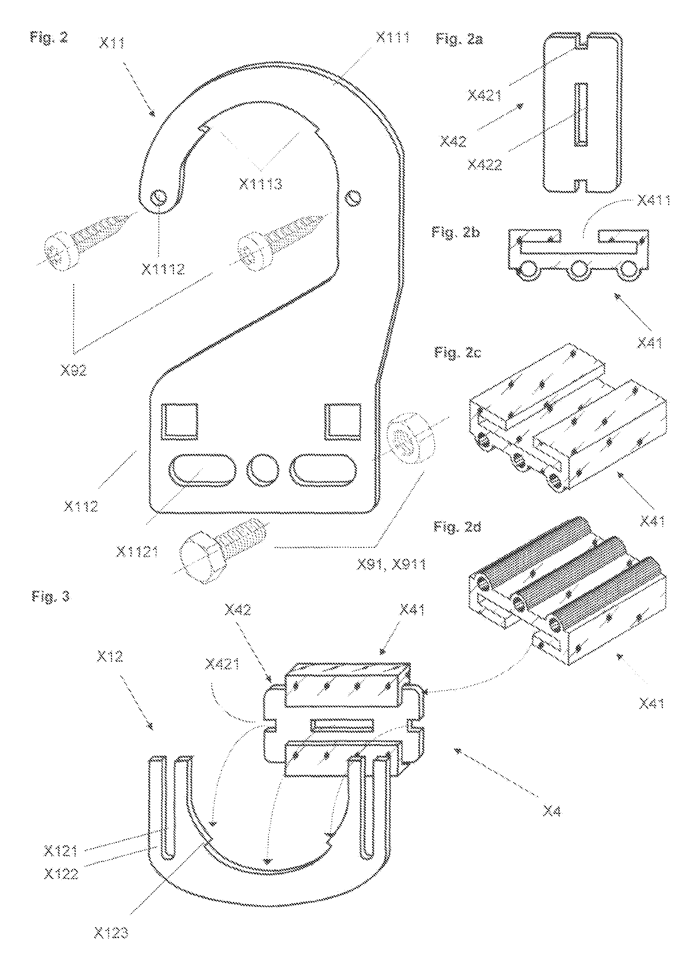

Figur 1 zeigt die in [1], Seite 61 gezeigte Rohrschelle vom Typ V, die an einer mit Montageöffnungen versehenen Profilschiene 63 montiert ist. Diese bekannte Rohrschelle X1, die anhand der Figuren 2 und 3 näher erläutert wird, weist ein Systemelement X11 auf, an dem ein der Aufnahme eines Rohres 2 dienendes und mit einem Abschlussbügel X12 abschliessbares Aufnahmeteil X111 und ein mit Montageöffnungen X1121 versehenes Montageteil X112 vorgesehen ist. Das Aufnahmeteil X111, das eine annähernd halbkreisförmige Ausnehmung aufweist, ist beidseits der Ausnehmung mit Gewindebohrungen versehen, in die der Befestigung des Abschlussbügels X12 dienende Verbindungsschrauben X92 eindrehbar sind. Der mit einer annähernd halbkreisförmigen Ausnehmung versehene Abschlussbügel X12, der die Form eines gegen das Aufnahmeteil X111 geöffneten Bogens aufweist, weist beidseits der Ausnehmung gabelförmige Endstücke X122 mit nach aussen geöffneten Schlitzen X121 auf, die, wie in Figur 1 gezeigt, je der Aufnahme eines Schafts der Verbindungsschrauben X92 dienen. Nach dem Lösen der Verbindungsschrauben X92 kann der Abschlussbügel X12 soweit gegen das Aufnahmeteil X111 hin verschoben werden, bis das installierte Rohr 2 fest umschlossen ist. Figur 2 zeigt das Systemelement X11 von Figur 1 um 180° gedreht. Das Systemelement X11 kann auch in dieser Lage montiert werden. Allerdings kann das Montageteil X12 (siehe Figur 3) in diesem Fall ausfallen, sobald sich die Montageschrauben X92 lösen.

Zur Schalldämmung, zur Vermeidung von störenden Druckstellen, zum elastischen Halten und gegebenenfalls zur Isolation des Rohrs 2 sind das Aufnahmeteil X111 und der Abschlussbügel X12 an den einander zugewandten Seiten mit elastischen bzw. flächigen Stützelementen X4 versehen, die aus einem von einem Federblatt X42 gehaltenen Lagerelement X41 aus Gummi oder Kunststoff besteht. Figur 2a zeigt ein nahezu rechteckiges Federblatt X42 aus Stahl, das mit einem Mittelschlitz X422 und an beiden Enden mit Kerben X421 versehen ist. Das Federblatt X42 kann derart in den Abschlussbügel X12 und das Aufnahmeteil X111 eingelegt werden, dass zwei dort vorgesehene Haken X1113 bzw. X123 von entgegengesetzten Richtungen in die Kerben X421 eingreifen und das Federblatt X42 nach unten gebogen halten, wobei zusätzlich Elemente des Abschlussbügels X12 oder des Aufnahmeteils X111 in den Mittelschlitz X421 eingreifen und das Federblatt X42 stabilisieren.

Die Figuren 2b, 2c und 2d zeigen in zwei- und dreidimensionalen Darstellungen ein extrudiertes Lagerelement X41 in der Form eines der Aufnahme des Federblatts X42 dienenden T-Profils. Figur 3 zeigt das Lagerelement X41 mit dem eingelegten Federblatt X42 während der Montage am Abschlussbügel X12.

Durch die Montageöffnungen X1121 des Montageteils X112 und durch Öffnungen in der Profilschiene 63 hindurch sind Montageschrauben X91 führbar, mittels derer die Rohrschelle X1 fest mit der Profilschiene 63 verbindbar ist.

Von Vorteil bei dieser bekannten Rohrschelle ist, dass die installierten Leitungen schonend gehalten werden, so dass Schädigungen und Defekte weitgehend vermieden werden. Nachteilig hingegen ist insbesondere der aufwändige Aufbau der Rohrschelle, der einen grossen Materialaufwand, einen hohen Herstellungsaufwand sowie einen hohen Montageaufwand verursacht. Die zahlreichen verschiedenen Teile müssen einzeln mit entsprechendem Aufwand produziert und mit Geschick zusammengefügt werden.

Zudem besteht die Gefahr, dass einzelne der Teile, insbesondere die aufgesetzten Lagerelemente verloren gehen können, oder aufgrund punktuell hoher Belastungen bald verschlissen werden.

Besonders nachteilig ist ferner, dass die Verwendungsmöglichkeiten dieser Rohrschelle im Wesentlichen auf die Montage an der genannten Profilschiene begrenzt sind.

Da das Systemelement der bekannten Rohrschelle aus einer Metallplatte ausgestanzt ist und in einer Ebene liegt, die von dem installierten Rohr senkrecht durchlaufen wird, ist auch die Möglichkeit zur Montage von Rohren mit verschiedenem Durchmesser eng begrenzt.

Von den Herstellern müssen daher verschiedene Modelle von Rohrschellen zur Verfügung gestellt werden, angepasst an die möglichen Installationssituationen und an die verschiedenen Durchmesser der zu installierenden Leitungen und Rohre.

Die oben beschriebenen Nachteile bekannter Vorrichtungen lassen sich insbesondere auch anhand der nachstehenden Dokumente nachweisen. [2], US 5 794 895 A (siehe auch die DE 19511464 A1), offenbart eine Vorrichtung zum Halten und Führen von Kabel in Schaltschränken mit einem Haltebügel, der mit einem Träger des Schaltschrankes über eine Befestigungsplatte mittels Befestigungsmitteln lösbar verbunden ist. Zur Aufnahme der Kabel und Schläuche ist ein von der Befestigungsplatte abstehender Bügelabschnitt mit einem eingebogenen Endabschnitt vorgesehen, der von einem ebenfalls von der Befestigungsplatte abstehenden Abdeckabschnitt unter Freilassen einer Einführöffnung übergriffen wird. Als Befestigungsmittel dient ein Rastbügel der die Befestigungsplatte des Haltebügels übergreift, und mit Seitenschenkeln in entsprechend beabstandete Rastschlitze des Trägers eingreift. Diese Lösung erfordert daher Montagemittel, die speziell für den beschriebenen Schaltschrank ausgestaltet sind. Ferner sind die installierten Kabel vom Haltebügel nur lose gehalten. [3], US 4 042 198 A, offenbart eine an der Oberseite montierbare Aufhängevorrichtung für Rohre mit einem Aufnahmeteil, das an Rohre mit einem bestimmten Durchmesser angepasst und daher nicht für Rohre mit unterschiedlichen Durchmessern verwendbar ist. [4], JP 09 229238 A, offenbart eine an der Oberseite montierbare Aufhängevorrichtung, die dem Einlegen von Kabeln dient, die nur lose gehalten werden. Diese relativ aufwändig gestaltete Aufhängevorrichtung ist daher nur beschränkt einsetzbar und erlaubt keine spielfreie Montage der zu installierenden Leitungen, weshalb insbesondere auch mit störenden Geräuschen zu rechnen ist, wenn der Fluss von Medien in den installierten Rohren zu und abgeschaltet wird. Weiterhin können aufgrund der losen Lagerung der Leitungen Verschiebungen auftreten, durch die die installierten Leitungen unvorteilhaft beeinträchtigt werden. [5], US 6 629 676 B1, offenbart eine weitere Aufhängevorrichtung in die Rohre und Leitungen lose eingelegt werden, weshalb auch hier die beschriebenen Nachteile resultieren. Diese Aufhängevorrichtung weist ferner ein Kopfstück auf, welches mehrere, jedoch nicht vorteilhafte Montagemöglichkeiten bietet. [6], EP 1 286 443 A, offenbart ein dem Aufhängen von Kabeln dienendes Befestigungselement mit einem mit an der Decke montierbaren, abgewinkelten Befestigungsteil und einem hakenförmig ausgebildeten Aufnahmeteil, die nur lose miteinander verbunden sind. Auch mit dieser Vorrichtung lassen sich daher Leitungen und Rohre mit unterschiedlichem Durchmesser nicht spielfrei montieren. Ferner resultiert auch für diese Vorrichtung nur eine einzige Montagemöglichkeit.

Zu beachten ist ferner, dass bei den aus dem Stand der Technik bekannten Montagevorrichtungen bzw. Rohrschellen oft eine ungenügende Fixierung der installierten Leitung resultiert, weshalb beim Gebrauch der Leitung störende Geräusche resultieren, die kaum mehr beseitigt werden können und zu einer dauernden Störung des Anwenders führen. Dem Fachmann ist bekannt, dass beim Öffnen und Schließen von Ventilen das in den Leitungen geführte Medium oft stoßweise transportiert wird, wodurch Schläge auf die Leitung und die Rohrschellen einwirken.

Der vorliegenden Erfindung liegt daher die Aufgabe zugrunde, eine verbesserte Rohrschelle zu schaffen, mittels der Leitungen, insbesondere Rohre, vorteilhaft installiert werden können.

Insbesondere ist eine einfach aufgebaute und daher kostengünstig und automatisiert herstellbare Rohrschelle zu schaffen, die unter verschiedenen Installationsbedingungen vielseitig montierbar und zum spielfreien, stabilen und Material schonenden Halten von Rohren und Leitungen geeignet ist, die unterschiedliche Durchmesser aufweisen können.

Dabei soll gewährleistet bleiben, dass die durch den Medientransport in den Leitungen verursachte Geräuschentwicklung, unabhängig vom jeweiligen Durchmesser der installierten Leitung, minimal bleibt.

Diese Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die für die Installation von Leitungen, insbesondere Rohren, vorgesehene Rohrschelle umfasst ein ein- oder mehrteiliges Systemelement, das ein der Montage der Rohrschelle dienendes Montageteil und ein Aufnahmeteil mit einem ersten und einem zweiten Endstück sowie ein Abschlusselement aufweist, welches dem Halten der in das Aufnahmeteil eingelegten Leitung dient und dazu mit dem Systemelement verbindbar ist.

Erfindungsgemäss ist das Aufnahmeteil vorzugsweise aus einem Metallband oder einer Metallplatte ausgestanzt und derart gebogen, dass ein der Aufnahme der Leitung dienendes, V-förmig ausgestaltetes Aufnahmesegment gebildet wird, das über das erste Endstück mit dem Montageteil verbunden ist, welches wenigstens zweimal in dieselbe Richtung um vorzugsweise 90° abgewinkelt ist, und dadurch ein vorzugsweise senkrecht zum Aufnahmeteil verlaufendes, und mit wenigstens einem ersten Montageelement versehenes erstes Montageteilstück, und ein daran anschliessendes mit wenigstens einem zweiten Montageelement versehenes zweites Montageteilstück aufweist. Das Systemelement und die weiteren Teile der Rohrschelle können ferner aus Kunststoff bzw. Plastik gefertigt werden.

Die erfindungsgemässe Rohrschelle kann in einfacher Weise montiert werden, indem das erste oder das zweite Montageteilstück mit einem Installationskörper, z.B. der Decke oder einer Wand eines Gebäudes, einer Deckenstütze oder einem Ausleger vorzugsweise formschlüssig verbunden, gegebenenfalls verschraubt wird.

Aufgrund der V-förmigen Ausgestaltung des Aufnahmesegments kann die Rohrschelle für die Installation von Leitungen verwendet werden, deren Durchmesser sich bis zu einem Mehrfachem voneinander unterscheiden. Dabei ist sichergestellt, dass die installierte Leitung, unabhängig von deren Durchmesser, schonend gehalten wird und mittels des Abschlusselements zuverlässig fixiert werden kann.

Die mit zwei oder mehreren Montageteilstücken versehene Rohrschelle ist daher praktisch universell einsetzbar und somit für den Handwerker von grossem Nutzen.

Der Handwerker muss nicht mehr unter verschiedenen Rohrschellen das für den vorhandenen Rohrdurchmesser und die Montageart genau passende Modell aussuchen, sondern kann, innerhalb einer bestimmten Durchmesser-Bandbreite, die universell einsetzbare erfindungsgemässe Rohrschelle verwenden.

Für den Hersteller und Wiederverkäufer ergeben sich ebenfalls zahlreiche Vorteile. Da alle erfindungsgemäss ausgestalteten Systemelemente, die verschiedene Funktionen erfüllen, aus einem einzigen band- oder plattenförmigen Metallelement einstückig gefertigt werden können, resultiert ein minimaler Herstellungsaufwand. Aufgrund der universellen Verwendbarkeit der erfindungsgemässen Rohrschelle kann der Hersteller, Wiederverkäufer und Handwerker das Sortiment stark reduzieren, wodurch sich Kostenreduktionen in den Bereichen der Vermarktung, Lagerung, Logistik und Materialdisposition auf der Baustelle ergeben.

Durch die vorteilhafte Ausgestaltung des Aufnahmesegments, das am Rohr anliegt, ergibt sich eine schonende Lagerung der installierten Leitung. Die Belastung der Leitung durch die Rohrschelle ist aufgrund des resultierenden Flächendrucks an zwei Stellen des V-förmigen Aufnahmesegments daher auch dann minimal, wenn keine zusätzlichen Lagerelemente aus Gummi oder Kunststoff eingesetzt werden.

Durch den Einsatz elastischer Elemente kann die auf die installierte Leitung einwirkende Belastung weiter reduziert werden. Besonders vorteilhaft werden verformbare Lagerelemente eingesetzt, die in der Art eines Ärmels oder eines Schlauchs über das Aufnahmeteil gezogen werden, bevor diese mittels eines Werkzeugs gebogen wird, um das Aufnahmesegment zu erzeugen. Alternativ kann ein elastischer Montageblock in das V-förmige Aufnahmesegmenten eingesetzt und beispielsweise mittels Ankerelementen arretiert werden.

Im Gegensatz zur eingangs beschriebenen bekannten Rohrschelle können die Lagerelemente daher besonders einfach und ohne zusätzliche Hilfselemente, wie Federblätter, montiert werden. Aufgrund des geringen Flächendrucks werden die Lagerelemente nur minimal belastet und sind kaum verschleissanfällig.

Vorzugsweise besteht das Lagerelement aus weichelastischem Material, so dass die mittels des Montageelements gegen das Lagerelement gedrückte Leitung flächig an diesem anliegt. Dadurch werden ferner Vibrationen gedämpft und verhindert, dass sich Körperschall im Gebäude ausbreiten kann.

In vorzugsweisen Ausgestaltungen ist das Montageteil des Systemelements derart gebogen, dass das zweite Montageteilstück auf der unteren oder oberen Seite des Aufnahmeteils und vorzugsweise parallel dazu verläuft. In einer dieser Ausgestaltungen kann das zweite Montageteilstück in einfacher Weise an einem waagrecht ausgerichteten Element, beispielsweise an der Decke montiert werden. Sofern das zweite Montageteilstück unterhalb des Aufnahmeteils durchgeführt wird, kann die Rohrschelle auf den Ausleger abgestützt und montiert werden.

In einer weiteren vorzugsweisen Ausgestaltung weist das Montageteil ein abgewinkeltes drittes Montageteilstück auf, welches zum zweiten Endstück des Aufnahmeteils zurückgeführt und vorzugsweise mit diesem verbindbar ist. In dieser Ausgestaltung bilden die drei Montageteilstücke des Montageteils zusammen mit dem Aufnahmeteil zumindest annähernd ein in sich geschlossenes, stabiles Rechteck. Dazu können das Aufnahmeteil und das dazu korrespondierende dritte Montageteilstück mit Kopplungselementen versehen sein. Beispielsweise weist das Montageteilstück eine Öffnung auf, durch die hindurch eine am Aufnahmeteil angeformte Zunge hindurchgeführt werden kann.

Alternativ können das freie Ende des zweiten Montageteilstücks und das frei liegende zweite Endstück des Aufnahmeteils anhand eines aus Metall oder Kunststoff bestehenden Abschlussstücks miteinander verbunden werden, wodurch nicht nur eine erhöhte Stabilität, sondern auch ein gefälliges optisches Erscheinungsbild resultiert.

In einer weiteren vorzugsweisen Ausgestaltung ist das vorzugsweise senkrecht zum Aufnahmeteil ausgerichtete erste Montageteilstück in einem Winkel von vorzugsweise 45° gegenüber der Achse der einzulegenden Leitung geneigt, so dass das Aufnahmeteil und das zweite Montageteilstück seitlich gegeneinander verschoben sind. Dadurch wird das Montieren von Befestigungselementen, wie Schrauben oder Dübel, wesentlich vereinfacht.

Das Aufnahmeteil und das aus Metall oder Kunststoff bestehende Abschlusselement können in vielfältiger Weise mittels zueinander korrespondierender Kopplungselemente miteinander verbunden werden. Kopplungselemente können in die Endstücke oder das Aufnahmesegment des Aufnahmeteils eingearbeitet sein und/oder separat vorgesehen werden. In den Endstücken des Aufnahmeteils können Gewindebohrungen vorgesehen sein, die zu Montageschrauben korrespondieren die durch Öffnungen in den Endstücken des Abschlusselements durchgeführt werden.

Besonders vorteilhaft sind Abschlusselemente mit Endstücken einsetzbar, die mit Arretierelementen versehen sind. Beispielsweise wird ein Abschlussbügel mit hakenförmigen Elementen vorgesehen, der soweit in die Öffnungen im Aufnahmeteil eingeführt wird, bis das installierte Rohr fixiert ist und die hakenförmigen Elemente in den Öffnungen gehalten sind.

Alternativ kann ein mit hakenförmigen Elementen versehener Kunststoffgurt vorgesehen sein, dessen Endstücke in die Öffnungen im Aufnahmeteil eingeführt und eingerastet werden. Vorzugsweise wird eines der Endstücke des Kunststoffgurts mittels eines Ankerelements fest mit dem Aufnahmeteil verbunden, so dass nur noch das mit hakenförmigen Kopplungselementen versehene zweite Endstück in die freie Öffnung im Aufnahmeteil eingeführt und festgezogen werden muss.

Weiterhin können die Endstücke eines Kunststoffgurts, der durch die Öffnungen im Aufnahmeteil hindurch geschlauft wird, miteinander verbunden werden.

Bereits aufgrund der oben beschriebenen Massnahmen können Leitungen und Rohre installiert werden, deren Durchmesser in einem weiten Bereich variieren. Eine weitere diesbezügliche Verbesserung resultiert, wenn das Aufnahmeteil, insbesondere das Aufnahmesegment, elastisch ausgestaltet und mit einem grösseren Radius versehen wird. Dadurch gelingt es, sowohl das Abschlusselement, als auch das Aufnahmeteil derart anzuziehen, dass eine enge Verbindung mit der installierten Leitung resultiert und diese, unabhängig von ihrem Durchmesser, spielfrei gehalten wird.

Nachfolgend wird die Erfindung anhand von Zeichnungen näher erläutert. Dabei zeigt:
- Fig. 1: die eingangs beschriebene und aus [1] bekannte Rohrschelle X1 mit einem Systemelement X11, das an einer Profilschiene 63 montierbar ist und dem Halten eines Rohres 2 dient, welches mittels eines Abschlussbügels X12 fixierbar ist;
- Fig. 2: das mit einem Aufnahmeteil X111 und einem Montageteil X112 versehene Systemelement X11 der Rohrschelle X1 von Fig. 1;
- Fig. 2a: das in das Aufnahmeteil X111 oder den Abschlussbügel X12 einsetzbare Federblatt X42;
- Fig. 2b: das auf das Federblatt X42 aufsetzbare Kunststoffteil X41 in zweidimensionaler Darstellung;
- Fig. 2c: das Kunststoffteil X41 von Fig. 2b in dreidimensionaler Darstellung von unten gesehen;
- Fig. 2d: das Kunststoffteil X41 von Fig. 2b in dreidimensionaler Darstellung von oben gesehen;
- Fig. 3: den Abschlussbügel X12 der Rohrschelle X1 von Fig. 1 während des Einsetzens des mit dem Kunststoffteil X41 versehenen Federblatts X42;
- Fig. 4: eine erfindungsgemässe Rohrschelle 1 mit einem in zwei Varianten (Band und Bügel) schematisch gezeigten Abschlusselement 12, 12' und einem aus einem Band oder einer Metallplatte ausgestanzten und gebogenen Systemteil 11, das ein dem Halten einer Leitung 2 dienendes Aufnahmeteil 111 und ein Montageteil 112 mit einem ersten und einem zweiten Teilstück 1121, 1122 aufweist, von denen das zweite Teilstück 1122 mittels einer Montageschraube 91 an der Decke 81 eines Gebäudes montiert ist;
- Fig. 5: die Rohrschelle 1 von Figur 4, die mittels des ersten Teilstücks 1121 des Montageteils 112 an einer Wand 82 montiert ist;
- Fig. 6: das Systemteil 11 der Rohrschelle 1 von Figur 4 in dreidimensionaler Darstellung, das eine im Aufnahmeteil 111 vorgesehene Öffnung 11111 aufweist, durch die hindurch ein Werkzeug, gegebenenfalls die Montageschraube 91 hindurch führbar ist;
- Fig. 7a-b: die Rohrschelle 1 von Figur 4 mit einem vorzugsweise ausgestalteten elastischen bzw. festen Abschlusselementen 12, die auf verschiedene Weise mit dem Systemteil 11 koppelbar sind;
- Fig. 8a-b: die Rohrschelle 1 von Figur 4 mit weiteren vorzugsweise ausgestalteten elastischen bzw. festen Abschlusselementen 12 und mit Lagerelementen 4, die der schonenden Lagerung der installierten Leitungen 2 dienen;
- Fig. 9: die Rohrschelle 1 von Figur 8b mit einem aufsetzbaren Abschlussstück 5, mittels dessen das freie Ende des zweiten Montageteilstücks 1122 und das frei liegende zweite Endstück 1112 des Aufnahmeteils 111 miteinander verbunden sind;
- Fig. 10: eine erfindungsgemässe Rohrschelle 1 mit einem zweiteiligen Montageteil 112 dessen erstes Montageteilstück 1121 mit beiden Endstücken 1112, 1113 des Aufnahmeteils 111 verbunden und um 90° gegenüber diesem gebogen ist und dessen zweites Montageteilstück 1122 unterhalb des Aufnahmeteils 111 parallel zu diesem verläuft;
- Fig. 11: eine erfindungsgemässe auf einen Ausleger 61 abgelegte Rohrschelle 1 mit einem zweiteiligen Montageteil 112 dessen erstes Montageteilstück 1121 nur einem Endstück 1113 des Aufnahmeteils 111 verbunden und um 90° gegenüber diesem gebogen ist und dessen zweites Montageteilstück 1122 unterhalb des Aufnahmeteils 111 parallel zu diesem verläuft;
- Fig. 12a-b: eine erfindungsgemässe Rohrschelle 1 mit einem Systemteil 11, bei dem das Aufnahmeteil 111 und die Teilstücke 1121, 1122 des Montageteils 112 gegeneinander verschoben sind; und
- Fig. 13: die Rohrschelle 1 von Figur 4 mit einem in der Form eines Bügels ausgestalteten Abschlusselements 12';
- Fig. 14a-c: eine erfindungsgemässe Rohrschelle 1 in einer bevorzugten Ausgestaltung mit einem auf das Systemelement 11 aufsetzbaren Abschlussstück 5; und
- Fig. 15a-b: die Rohrschelle 1 von Fig. 14a in einer weiteren vorzugsweisen Ausgestaltung, in der das Abschlussstück 5, 5' mit einem verschiebbar gelagerten und/oder elastischen Abschlusselement 12 versehen ist.

Die Figuren 1, 2 und 3 zeigen die aus [1] bekannte und eingangs beschriebene Rohrschelle X1 sowie Teile davon.

Die Figuren 2a - 2d zeigen die eingangs beschriebenen aufwändig gestalteten und nur mit grossem Aufwand montierbaren Stützelemente X4 und Teile X41, X42 davon, deren Verwendung bei der erfindungsgemässen Rohrschelle 1 vorteilhaft vermieden wird.

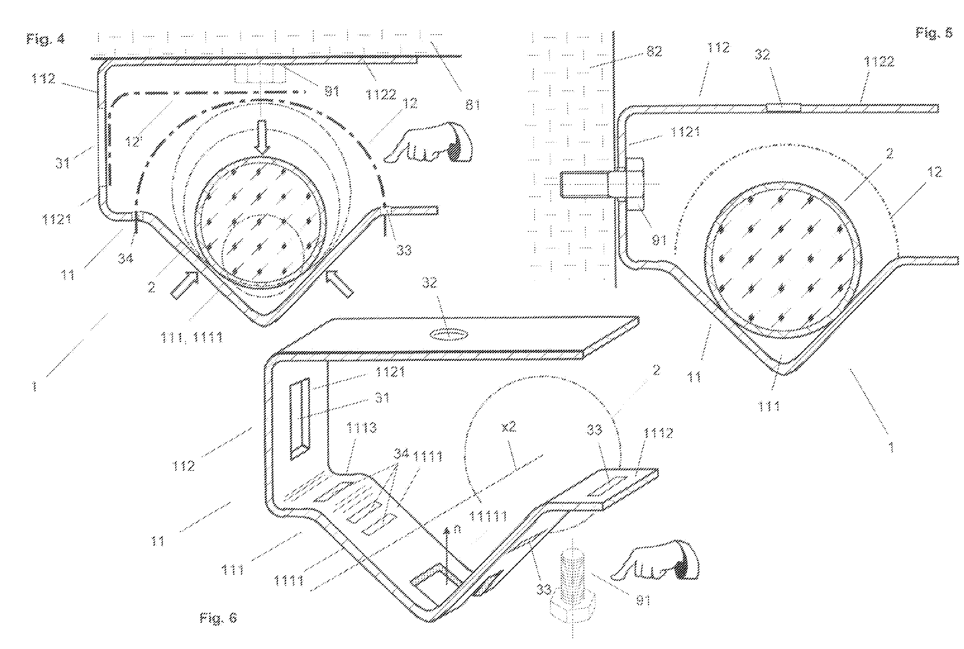

Die Figuren 4, 5 und 6 zeigen eine erste erfindungsgemässe Rohrschelle 1 mit einem in zwei Varianten schematisch gezeigten Abschlusselement 12, 12' und einem dazu korrespondierenden Systemteil 11, das ein dem Halten einer Leitung 2 dienendes Aufnahmeteil 111 und ein Montageteil 112 aufweist, das mittels einer Montageschraube 91 an einem Teilstück 1122 an der Decke 81 oder einer Wand 82 eines Gebäudes montierbar ist. Das Abschlusselement 12, 12' kann als flexibles oder starres Band oder Bügel in Öffnungen 31, 33, 34 des Aufnahmeteils 111 oder des Montageteils 112 befestigt werden. Ein Winkel-förmiger Bügel 12' kann beispielsweise in der Öffnung 31 verschiebbar und arretierbar sein, wobei zu dessen Befestigung Schrauben und Schraubenmuttern (siehe Figur 13) oder vorzugsweise Rastverschlüsse verwendbar sind, welche automatisch in Ausnehmungen des Bügels 12' einrasten.

Das Systemteil 11 ist aus einem Metallband oder einer Metallplatte ausgestanzt und derart gebogen, dass im Bereich des Aufnahmeteils 111 ein der Aufnahme der installierten Leitung 2 dienendes V-förmiges Aufnahmesegment 1111 gebildet ist. Aus Figur 4 ist ersichtlich, dass das V-förmige Aufnahmesegment 1111 eine Leitung mit einem in einem weiten Bereich liegenden Durchmesser aufnehmen und spielfrei halten kann. Der minimale Durchmesser dₘᵢₙ und maximale Durchmesser dₘₐₓ können sich um einen Faktor n unterscheiden (dₘₐₓ = n * dₘᵢₙ), der beispielsweise zwischen 1 und 5 liegt.

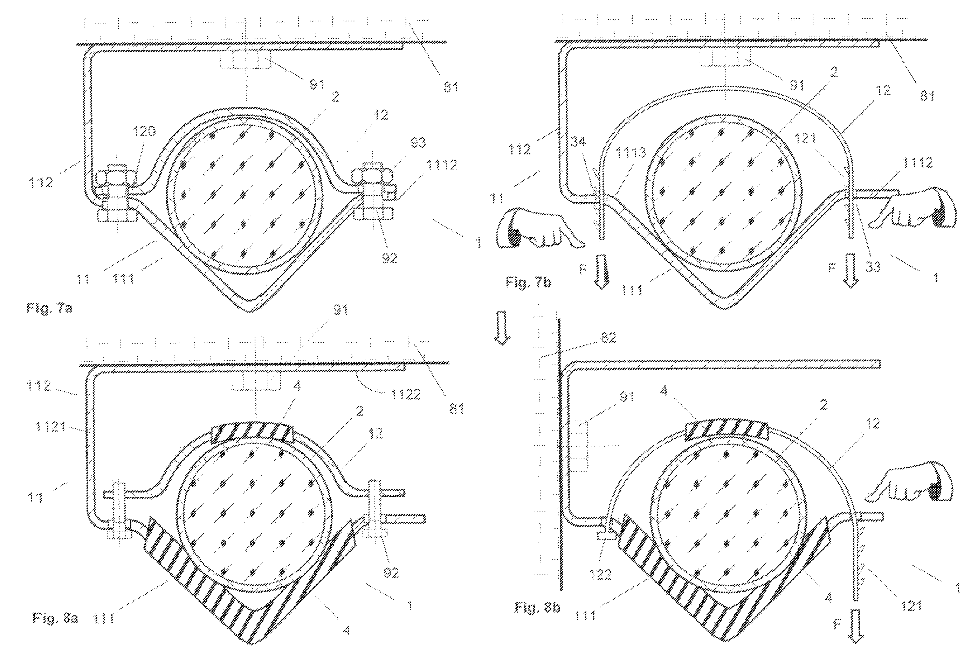

Die V-Form des Aufnahmesegments 1111 resultiert dabei aus zwei miteinander verbundenen Schenkeln, die gerade oder auch gewölbt sein können. Die Schenkel des Aufnahmesegments 1111 liegen dabei flächig an der Leitung an. Die in die erfindungsgemässe Rohrschelle 1 eingelegte Leitung wird daher unabhängig von deren Durchmesser stets in drei Zonen sicher gehalten; nämlich durch die entsprechenden Zonen an den beiden Schenkeln des Aufnahmesegments 1111 sowie durch das Abschlusselement 12, 12'. Bereits durch dieses sichere und elastische Halten an drei Stellen (siehe die drei Kraftvektoren) wird sichergestellt, dass Schwingungen der Leitung optimal gedämpft werden, weshalb bei der Installation von Leitungen mit erfindungsgemässen Rohrschellen 1 kaum störende Geräusche während des Gebrauchs der Leitungen entstehen können. Durch die zusätzliche Verwendung von elastischen Lagerelementen 4 (siehe z.B. die Figuren 8a und 8b) kann die Geräuschentwicklung weiter reduziert werden.

Im Gegensatz zur Rohrschelle von Figur 1 werden Leitungen 2 mit der erfindungsgemässen Rohrschelle 1 daher auch dann schonend gehalten, wenn noch keine elastischen Lagerelemente montiert sind.

Das Aufnahmesegment 1111 bildet mit zwei beidseits daran vorgesehenen Endstücken 1112, 1113 das Aufnahmeteil 111, an das das Montageteil 112 anschliesst, welches zweimal um 90° in dieselbe Richtung abgewinkelt ist und dadurch ein senkrecht zum Aufnahmeteil 111 verlaufendes und mit wenigstens einem ersten Montageelement der versehenes erstes Montageteilstück 1121 und ein daran anschliessendes mit wenigstens einem zweiten Montageelement 32 versehenes zweites Montageteilstück 1122 aufweist (siehe Figur 6). Die Montageelemente 31, 32 sind vorzugsweise als Öffnungen ausgebildet, durch die hindurch eine Montageschraube 91 führbar ist. Die Montageelemente 31, 32 können jedoch auch direkt mit Montageelementen zusammenwirken, die an einem Installationskörper, beispielsweise an einer Deckenstütze, vorgesehen sind. So können die Montageelemente 31, 32 hakenförmig ausgestaltet sein und in Öffnungen eingreifen, die am Installationskörper vorgesehen sind. Das als Öffnung ausgestaltete Montageelement 31 kann ferner entweder zur Aufnahme der Montageschraube 91 oder zur Aufnahme von Befestigungselementen 92, 93 dienen, wie dies in Figur 13 gezeigt ist. Vorzugsweise wird das Systemteil 11 derart ausgestaltet, dass alle beschriebenen Montagemöglichkeiten für die Rohrstelle 1 und das Abschlusselement 12, 12' realisierbar sind.

Besonders vorteilhaft bei der erfindungsgemässen Ausgestaltung des Systemteils 111 ist ferner, dass die gegeneinander abgewinkelten Montageteilstücke 1121, 1122, ..., von denen wenigstens zwei vorgesehen sind, wahlweise mit einem praktisch beliebigen Installationskörper verbindbar sind. Die erfindungsgemässe Rohrschelle 1 kann daher verschiedenartig montiert werden, weshalb für verschiedene Montagesituationen nur ein Typ von Rohrschellen erforderlich ist.

In Figur 4 ist das zweite Teilstück 1122 des Montageteils 112 mittels der Montageschraube 91 mit der Decke 81 verbunden. In Figur 5 ist das erste Teilstück 1121 des Montageteils 112 mittels der Montageschraube 91 mit einer Wand 82 verbunden.

Figur 6 zeigt das Systemteil 11 der Rohrschelle 1 von Figur 4 in dreidimensionaler Darstellung. Dabei ist ersichtlich, dass die beiden Endstücke 1112, 1113 und das Aufnahmesegment 1111 des Aufnahmeteils 111 mit dritten und vierten Montageöffnungen 33, 34 versehen sind, in die Kopplungselemente eines Abschlusselements 12 einführbar sind, welches nur schematisch gezeigt ist. Die Montageöffnungen 33, 34 sind dabei derart angeordnet, dass entsprechend den Durchmesser der installierten Leitung 2 jeweils ein passendes Paar zur Verfügung steht. Sofern eine Leitung 2 mit kleinem Durchmesser eingesetzt wird, so werden tiefer gelegene Montageöffnungen 33, 34 verwendet. Grundsätzlich ist jedoch wenigstens ein paar von Montageöffnungen 33, 34 vorgesehen. Anstelle der dritten und vierten Montageöffnungen 33, 34 können wiederum andere Montageelemente vorgesehen werden, die an das Abschlusselement 12 angepasst sind.

Die Montageöffnungen 31, 32, 33, 34 werden vorzugsweise in das einstückige Systemelement 111 eingearbeitet, bevor dieses gebogen wird. Vorzugsweise werden die Montageöffnungen 31, 32, 33, 34 in demselben Arbeitsschritt in das Systemelement 111 eingearbeitet, in dem dieses ausgestanzt wird.

Als Abschlusselemente 12 sind beispielsweise die in den Figuren 7 und 8 gezeigten stabilen oder flexiblen Bügel, Schlaufen und Gurte aus Metall oder Kunststoff geeignet, die mit Kopplungselementen 120, 121 versehen sind.

Figur 7a zeigt eine Rohrschelle 1 mit einem Abschlusselement 12, das aus einem Metallbügel besteht, an dessen Enden Flanschelemente vorgesehen sind, in denen Öffnungen 120 zur Durchführung von Montageschrauben 92 vorgesehen sind, die in Schraubenmuttern 93 eingedreht werden.

Figur 7b zeigt ein elastisches Abschlusselement 12 in der Form eines Gurtes, der beidseits mit hakenförmigen Arretierelementen 120 versehen ist, die in den Montageöffnungen 33 und 34 gehalten sind. Beim Einschieben dieses elastischen Abschlusselements 12 in die im Aufnahmeelement vorgesehenen Montageöffnungen 33, 34 werden die Arretierelemente 120 gegen das Abschlusselement 12 gedrückt und können so durch die Montageöffnungen 33, 34 hindurch treten. Nach dem Verlassen der Montageöffnungen 33, 34 klappen die Arretierelemente 120 wieder nach aussen und bilden Widerhaken, welche das Abschlusselement 12 in der gewählten Position halten, in der die installierte Leitung 2 gegen das Aufnahmesegment gedrückt wird.

Die Montageöffnungen 33, 34 werden entsprechend ausgestaltet, so dass die Arretierelemente 120 durch diese hindurch gezogen werden können und anschliessend gehalten sind. Beispielsweise werden schlitzförmige oder rechteckförmige Montageöffnungen 33, 34 verwendet, die an das Abschlusselement 12 und die daran vorgesehenen Kopplungselemente angepasst sind.

In der Ausgestaltung von Figur 8a sind die Öffnungen 120 im Abschlusselement bzw. Metallbügel 12 mit einem Gewinde versehen, in die die Montageschrauben 92 eingedreht werden, weshalb keine Schraubenmuttern 93 benötigt werden.

Besonders einfach ist die Montage des Abschlusselements 12, wenn dieses, wie in Figur 8b gezeigt, an einem Ende mittels eines Ankerelements 122 in Position gehalten ist, so dass der Handwerker das Abschlusselement 12 nur am anderen Ende bedienen muss, um die installierte Leitung 2 zu fixieren. Durch die Verwendung eines flexiblen Abschlusselements 12 gelingt es, Leitungen und Rohre 2 mit verschiedenen Durchmessern derart zu montieren, dass diese stabil gehalten werden.

Diese vorteilhafte Eigenschaft kann in vorteilhaften Ausgestaltungen der Rohrschelle 1 noch erweitert werden, indem ein elastisches Aufnahmeelement 111 verwendet wird, welches beim Anziehen des flexiblen Abschlusselements 12 gegen die Leitung 2 gezogen werden kann, so dass sich der Innenradius des Aufnahmesegments 111 an den Aussenradius der installierten Leitung 2 anpasst, der in einem weiten Bereich variieren kann. Zur flexiblen Ausgestaltung des Aufnahmeteils 111 wird dieses beispielsweise mit reduzierter Dicke und aus einem elastischen Metall gefertigt.

Die Figuren 8a und 8b weisen die Rohrschellen 1 ferner Lagerelemente 4 aus Gummi oder Kunststoff auf, die der schonenden Lagerung der installierten Leitungen 2 dienen. Diese Lagerelemente 4 können im Vergleich zu den eingangs beschriebenen, bekannten Rohrschellen besonders einfach montiert werden. Beispielsweise werden Rohr- oder Ärmelförmige Lagerelemente 4 verwendet, die in sich geschlossen sind oder die einen Längsschnitt aufweisen, welcher es erlaubt, das betreffende Lagerelement 4 aufzuklappen und um das Aufnahmeelement 111 oder das Abschlusselement 112 zu legen. Sofern das ärmelförmige Lagerelement 4 in sich geschlossen ist, so wird es vorzugsweise über das Aufnahmeteil 111 gezogen, bevor dieses gebogen wird. Ein Hilfselement, wie das in Figur 2a gezeigte Federblatt, wird dabei nicht benötigt. Durch die eingesetzten Lagerelemente 4 wird die bereits vorteilhafte Lagerung der Leitung 2 noch weiter verbessert. Insbesondere, falls die Leitung 2 nahe der Rohrschelle 1 in einer Kurve geführt wird, werden Druckstellen, die an den Rändern des Aufnahmesegments 1111 entstehen könnten, durch die Lagerelemente 4 vermieden.

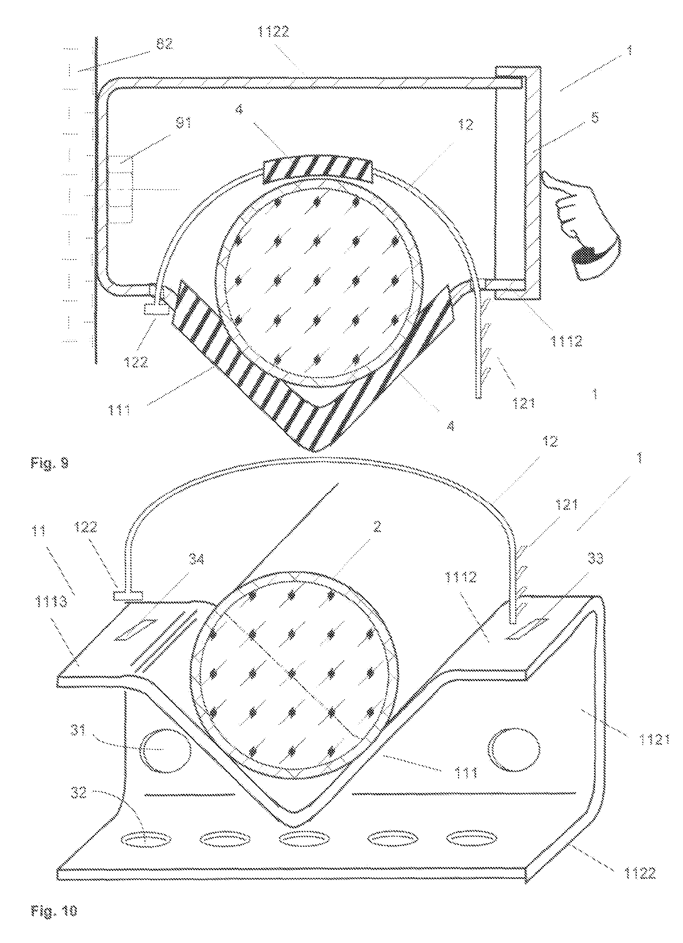

Figur 9 zeigt die Rohrschelle 1 mit einem einsetzbaren Abschlussstück 5, mittels dessen das freie Ende des zweiten Montageteilstücks 1122 und das frei liegende zweite Endstück 1112 des Aufnahmeteils 111 miteinander verbunden sind. Durch die Verwendung des vorzugsweise aus Kunststoff bestehenden Abschlussstücks 5 wird das nur einseitig gehaltene Aufnahmeelement 111 an dessen freiem Ende gehalten und kann daher auch bei grösseren Belastungen nicht nach unten gedrückt werden. Durch die Verwendung des Abschlussstücks 5 und somit durch das Abdecken der genannten Endstücke werden auch Verletzungsgefahren vermieden. Weiterhin kann der installierten Rohrschelle 1 eine vorteilhafte ästhetische Gestalt verliehen werden. Ferner können auf dem Abschlussstück 5 z.B. Informationen zu den installierten Leitungen 2 schriftlich festgehalten werden.

In den Figuren 4, 10, 11 und 12 ist gezeigt, dass das Montageteil 112 in verschiedener Weise vorteilhaft gegenüber dem Aufnahmeteil 111 gebogen werden kann.

Grundsätzlich ist das erste und/oder das zweite Endstück 1112, 1113 des Aufnahmeteils 111 einstückig mit dem ersten Montageteilstück 1121 verbunden und um zumindest annähernd 90° gegenüber diesem gebogen. Das zweite Montageteilstück 1122 ist gegenüber dem ersten Montageteilstück 1121 vorzugsweise derart gebogen, dass es auf der unteren oder oberen Seite des Aufnahmeteils 111 und parallel dazu verläuft.

In Figur 10 sind das erste und das zweite Endstück 1112, 1113 des Aufnahmeteils 111 einstückig mit dem ersten Montageteilstück 1121 verbunden, welches seitlich der beiden Endstücke 1112, 1113 um 90° gegenüber diesem gebogen ist. Das zweite Montageteilstück 1122 ist gegenüber dem ersten Montageteilstück 1121 derart um 90° gebogen, dass es auf der unteren Seite des Aufnahmeteils 111 und parallel dazu verläuft.

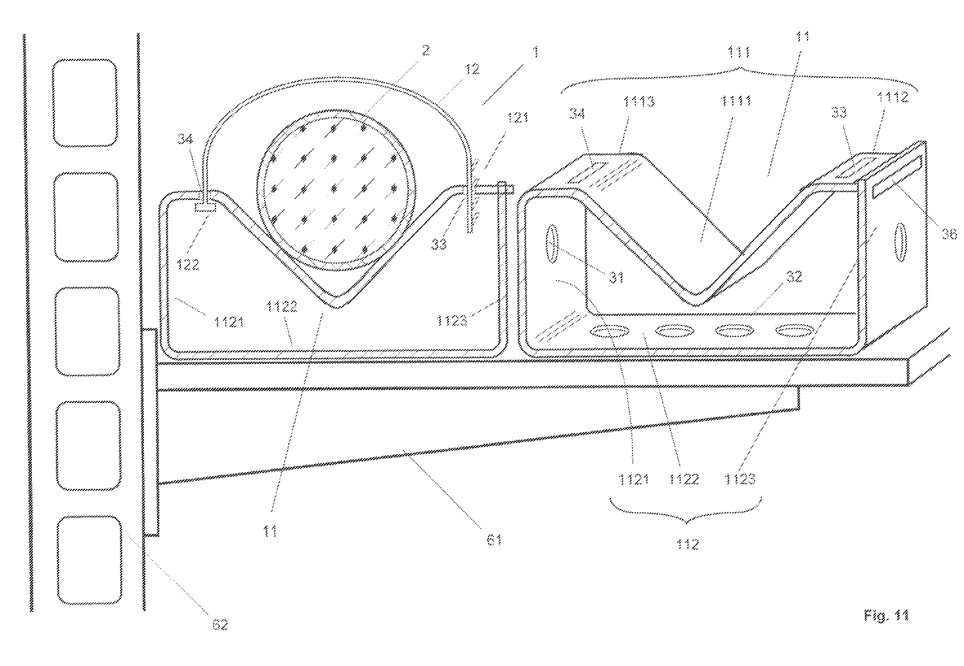

In Figur 11 ist nur das zweite Endstück 1113 des Aufnahmeteils 111 einstückig mit dem ersten Montageteilstück 1121 verbunden, welches frontseitig um 90° gegenüber diesem gebogen ist. Das zweite Montageteilstück 1122 ist gegenüber dem ersten Montageteilstück 1121 wiederum derart um 90° gebogen, dass es auf der unteren Seite des Aufnahmeteils 111 und parallel dazu verläuft.

Die Rohrschelle 1 in den Ausgestaltungen der Figuren 10 und 11 kann auch vorteilhaft auf dem gezeigten Ausleger 61 abgesetzt werden kann, der beispielsweise von einer Deckenstütze 62 gehalten ist.

In der in Figur 11 gezeigten vorzugsweisen Ausgestaltung weist die Rohrschelle 1 ferner ein drittes Montageteilstück 1123 auf, welches parallel zum ersten Montageteilstück 1121 verläuft und etwa dieselbe Länge aufweist, vorzugsweise etwas, z.B. 1cm, länger ist. Das dritte Montageteilstück 1123 ist auf der Höhe des Aufnahmeteils 111 mit einer Aufnahmeöffnung 36 versehen, in die das gegebenenfalls verjüngte erste Endstück 1112 des Aufnahmeteils 111 oder eine daran angeformte Zunge eingeführt werden kann. Durch die Verbindung des Aufnahmeteils 111 und des dritten Montageteilstücks 1123 resultiert eine in sich geschlossene stabile Struktur.

An jedem der Montageteilstücke 1121, 1122, 1123 der in den Figuren 10 und 11 gezeigten Rohrschellen 1 können wiederum beliebige vom Anwender gewünschten Montageelemente 31, 32, wie die gezeigten Montageöffnungen oder auch Haken vorgesehen sein, so dass die Rohrschelle 1 nicht nur auf den Ausleger 61 abgelegt, sondern auch auf diesem fixiert oder auch anderweitig montiert werden kann.

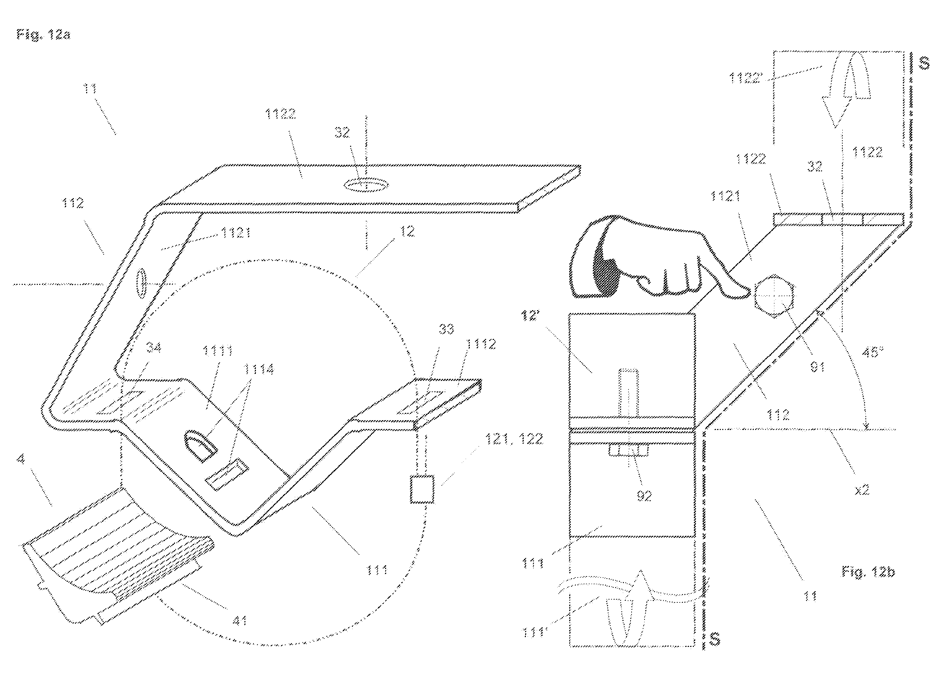

In den Figuren 12a und 12b ist ein Systemelement 11 mit einem Montageteil 112 gezeigt, bei dem das senkrecht zum Aufnahmeteil 111 stehende erste Montageteilstück 1121 in einem Winkel von 45° gegenüber der Achse x2 der einzulegenden Leitung 2 geneigt ist, so dass das Aufnahmeteil 111 und das zweite Montageteilstück 1122 entlang der Achse x2 gegeneinander verschoben sind. Diese Massnahme erleichtert die Montage der Rohrschelle 1 sowie die Installation der Leitung 2, da einerseits der Zugang zur Montageschraube 91 mit Werkzeugen durch das Aufnahmeteil 111 und andererseits das Einlegen der Leitung 2 durch das Montageteil 112 und die montierte Montageschraube 91 nicht behindert wird. Der Winkel, um den das erste Montageteilstück 1121 gegenüber der Achse x2 geneigt ist, wird unter Berücksichtigung der geometrischen Abmessungen der Rohrschelle 1, des benötigten Raumbedarfs für die beschriebenen Manipulationen und gegebenenfalls des maximalen Gewichts der zu installierenden Leitung 2 sowie der Festigkeit der verwendeten Materialien gewählt.

In dieser Ausgestaltung der Rohrschelle 1 ist ein als Montageblock ausgestaltetes Lagerelement 4 vorgesehenen, das Ankerelemente 41 aufweist, die in Aufnahmeöffnungen 1114 im Aufnahmesegments 1111 verankert werden können. Dieses vorzugsweise weichelastische Lagerelement 4, dass in das Aufnahmesegment 1111 eingesetzt wird, dient als Sitz für die installierte Leitung 2 und weist vorzugsweise eine leicht gerundete Form auf, die an die installierte Leitung 2 anpasst ist. Die Aufnahmeöffnungen 1114 können verschiedenartig ausgestaltet sein, wie dies in Figur 12a gezeigt ist. Es können Schlitz- oder Zungen-förmige Ausnehmungen oder Auspressungen im Aufnahmeteil 111 vorgesehen sein, welche das Lagerelement 4 sicher halten.

In Figur 12b ist das Abschlusselement 12 auf das Aufnahmeteil 111 aufgesetzt. Ferner ist in Figur 11b die Abwicklung des Systemelements 11 schematisch gezeigt, das aus einem Metallblech ausgeschnitten und anschliessend gebogen und geformt wird. Dabei ist ersichtlich, dass mehrere Systemelemente 11 ohne Materialverlust mit gemeinsamen Schnittlinien S-S aus dem Blech ausgeschnitten oder ausgestanzt werden können. Der Biegevorgang, insbesondere zur Realisierung des V-förmigen Aufnahmeelementes 1111 ist dabei mit nur geringem Aufwand realisierbar, da nur vier Biegezonen vorhanden sind.

Schematisch gezeigt ist ferner ein durch die Öffnungen in den Endstücken 33, 34 hindurch geführtes Abschlusselement 12, dessen Enden mit Kopplungselementen 120, 121 versehen sind, die miteinander verbindbar sind. Beispielsweise sind Gurte, Kabel oder mit Klettverschlüssen versehene Bänder verwendbar.

Sofern die installierte Leitung 2 isoliert werden soll, so werden vorzugsweise zwei zueinander komplementäre Halbschalen aus einem isolierenden Material vorgesehen, welche derart ausgestaltet sind, dass sie die Rohrschelle und die darin eingelegte Leitung aufnehmen können.

Figur 13 zeigt die Rohrschelle 1 von Figur 4 mit winkelförmigen Abschlusselement 12', das mit dem ersten Montageteilstück 1121 Montageteils 112 verschiebbar verbunden ist. In der gezeigten Ausgestaltung ist das Abschlusselement 12' mittels auf, einer Schraubenmutter 93 und einer Schraube 92 gehalten, die durch die Montageöffnung 31 hindurchgeführt ist. Die Montageöffnungen 31 ist schlitzförmig ausgestaltet, so dass der Abschlussbügel 12' gegen das zweite Montageteilstück 1122 in eine Position verschiebbar ist, in der eine Rohrleitung 2 in die Rohrschelle 1 eingelegt werden kann. Das Abschlusselement 12' weist die Form eines Bügels oder eines Winkelstücks mit zwei Schenkeln 121', 122' auf, von denen der erste Schenkel 121' mit dem Montageteil 112 verbunden ist und der zweite Schenkel 122' vorzugsweise federelastisch an die installierte Leitung angerückt.

Das winkelförmigen Abschlusselement 12' ist daher vorzugsweise aus einem elastischen Werkstoff, wie Kunststoff oder Metall gefertigt. In Figur 13 ist lediglich eine prinzipielle Darstellung gezeigt. In vorzugsweisen Ausgestaltungen wird hingegen vorgesehen, dass das winkelförmige Abschlusselement 12' in einen Aufnehmer einrasten kann, der beispielsweise aus zwei Flanschelementen besteht, die in das Montageteil 112 eingearbeitet sind und den ersten Schenkel 121' je von einer Seite umgreifen.

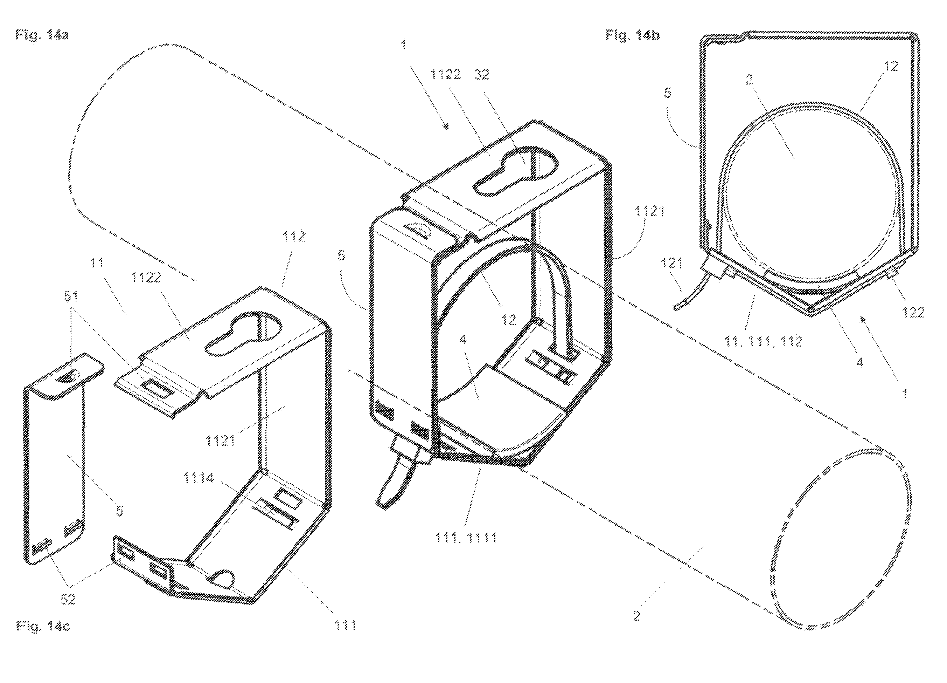

Die Figuren 14a, 14b und 14c zeigen eine erfindungsgemässe Rohrschelle 1 in einer bevorzugten Ausgestaltung. Die Figuren 14a und 14b zeigen verschiedene Ansichten der Rohrschelle 1 mit einer darin installierten Leitung 2. Figur 14c zeigt das Systemteil 11 der Rohrschelle mit dem Aufnahmeteil 111 und dem aus dem ersten und dem zweiten Montageteilstück 1121, 1122 bestehenden Montageteil 112. Die Enden des zweiten Montageteilstücks 1122 und des Aufnahmeteils 111 sind mittels Kopplungselementen 51, 52 mit einem aus Metall oder Kunststoff bestehenden Abschlussstück 5 verbindbar.

Wie in den Figuren 14a und 14b gezeigt ist, resultiert nach dem Aufsetzen des Abschlussstücks 5 auf das Systemteil 11 ein in sich geschlossenes Profil, welches aus dem Systemteil 111 und dem Abschlussstück 5 besteht. Das Abschlusselement 12 ist ein flexibles Band, dessen eines Endstück 122 fest im Aufnahmeteil 111 verankert und dessen anderes Endstück 121 durch eine Montageöffnung 34 hindurch gezogen ist.

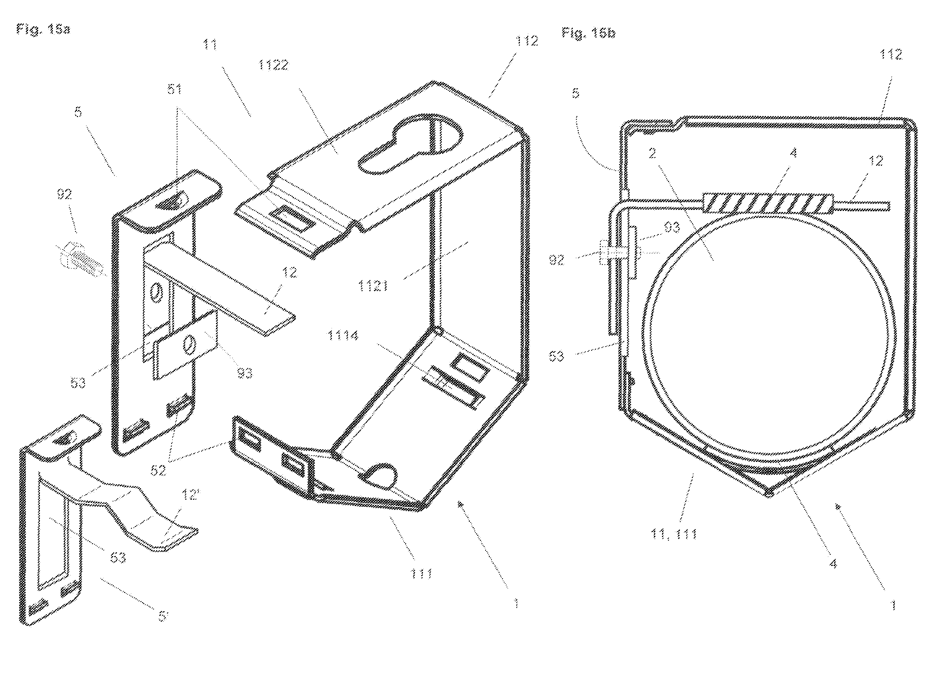

Die Figuren 15a und 15b zeigen die Rohrschelle 1 von Fig. 14a in einer weiteren vorzugsweisen Ausgestaltung, in der das Abschlussstück 5 bzw. 5' mit einem verschiebbar gelockten oder federelastischen Abschlusselement 12 bzw. 12' versehen ist. Durch diese Maßnahme wird die erfindungsgemässe Rohrschelle weiter vereinfacht. Ein separates Abschlusselement ist nicht mehr notwendig, sondern wird zusammen mit dem Abschlussstück 5 zur Verfügung gestellt. Dabei ist wesentlich, dass die Montagehandlungen des Aufsetzens des Abschlussstücks 5 und des Abschlusselements 12 gleichzeitig vollzogen werden. Sofern das Abschlusselement 12 unverschiebbar, aber elastisch ausgestaltet ist, so wird die installierte Leitung 2 automatisch fixiert. Sofern das Abschlusselement 12 am Abschlussstück 5 hingegen verschiebbar gelagert ist, so wird dieses gegen die installierte Leitung 2 geführt und beispielsweise mittels einer Schraube 92 fixiert.

Figur 15a zeigt das Systemelement 11 und das Abschlussstück 5, 5' in zwei verschiedenen Ausgestaltungen. Im Abschlussstück 5 ist ein Fenster 53 vorgesehen, in dem ein rechtwinkliges Abschlusselement 12 verschiebbar gelagert und mittels einer Schraube 92 und einer Konterplatte 93 an einer passenden Stelle fixierbar ist.

Ferner ist ein Abschlussstück 5' gezeigt, bei dem das Fenster 53 durch Ausscheiden einer Zunge gebildet wird, die gleichzeitig als elastisches Abschlusselement 12 dient. Bei dieser Ausgestaltung kann das Abschlussstück 5' auf das Systemteil 11 aufgesetzt werden, wodurch eine im Systemteil 11 installierte Leitung 2 automatisch fixiert wird.

Figur 15b zeigt die Rohrschelle 1 mit dem Abschlussstück 5, an dem das mit einem Lagerelement 4 versehene Abschlusselement 12 verschiebbar gelagert und mittels der Schraube 92 und der Konterplatte 93 an einer Stelle fixiert ist, an der die installierte Leitung 2 gehalten ist.

## Patentansprüche

1. Rohrschelle (1) für die Installation einer Leitung (2), insbesondere eines Rohres, mit einem Systemelement (11), das ein der Montage der Rohrschelle (1) dienendes Montageteil (112) und ein Aufnahmeteil (111) mit einem ersten und einem zweiten Endstück (1112; 1113) aufweist, und mit einem dem Halten der in das Aufnahmeteil (111) eingelegten Leitung (2) dienenden Abschlusselement (12), welches mit dem Systemelement (11) verbindbar ist,
**dadurch gekennzeichnet, dass** das Aufnahmeteil (111)
derart ausgestaltet ist, dass ein der Aufnahme der Leitung (2) dienendes V-förmiges Aufnahmesegment (1111) gebildet ist, das wenigstens über das erste Endstück (1113) mit dem Montageteil (112) fest oder lösbar verbunden ist, welches wenigstens zweimal in dieselbe Richtung um vorzugsweise 90° abgewinkelt ist, und dadurch ein vorzugsweise senkrecht zum Aufnahmeteil (111) verlaufendes, und mit wenigstens einem ersten Montageelement (31) versehenes erstes Montageteilstück (1121) und ein daran anschliessendes mit wenigstens einem zweiten Montageelement (32) versehenes zweites Montageteilstück (1122) aufweist.

2. Rohrschelle (1) nach Anspruch 1, **dadurch gekennzeichnet, dass** das erste und/oder das zweite Endstück (1112, 1113) des Aufnahmeteils (111) einstückig mit dem ersten Montageteilstück (1121) verbunden und, seitlich oder frontseitig um zumindest annähernd 90° gegenüber diesem gebogen ist und dass das zweite Montageteilstück (1122) auf der unteren oder oberen Seite des Aufnahmeteils (111) und vorzugsweise parallel dazu verläuft.

3. Rohrschelle (1) nach Anspruch 2, **dadurch gekennzeichnet, dass** das Montageteil (112) ein abgewinkeltes drittes Montageteilstück (1123) aufweist, welches zum zweiten Endstück (1112) des Aufnahmeteils (111) zurückgeführt und vorzugsweise mit diesem verbindbar ist, so dass die drei Montageteilstücke (1121, 1122, 1123) des Montageteils (112) und das Aufnahmeteil (111) zumindest annähernd ein Rechteck bilden.

4. Rohrschelle (1) nach Anspruch 2 oder 3, **dadurch gekennzeichnet, dass** das Montageteil (112) ein abgewinkeltes viertes Montageteilstück (1124) aufweist, welches, parallel zum zweiten Montageteilstück (1122) verlaufend und oberhalb des Aufnahmeteils (111) und der darin gehaltenen Leitung (2), zum ersten Montageteilstück (1121) zurückgeführt ist, so dass die vier Montageteilstücke (1121, 1122, 1123, 1124) des Montageteils (112) zumindest annähernd ein Rechteck bilden, innerhalb dessen das Aufnahmeteil (111) gehalten ist.

5. Rohrschelle (1) nach Anspruch 4, **dadurch gekennzeichnet, dass** das Aufnahmeteil (111) über das erste Endstück (1113) einstückig mit dem ersten Montageteilstück (1121) verbunden ist oder dass das Aufnahmeteil (111) mit den beiden Endstücken (1112, 1113), die vorzugsweise verjüngt oder mit zum zungenförmigen Enden versehen sind, in Aufnahmeöffnungen (36) des ersten und des dritten Montageteilstücks (1121, 1123) vorzugsweise lösbar gehalten ist.

6. Rohrschelle (1) nach einem der Ansprüche 2 - 5, **dadurch gekennzeichnet, dass** das freie Ende des zweiten Montageteilstücks (1122) und das frei liegende zweite Endstück (1112) des Aufnahmeteils (111) anhand eines aus Metall oder Kunststoff bestehenden Abschlussstücks (5) miteinander verbunden bzw. verbindbar sind.

7. Rohrschelle (1) nach einem der Ansprüche 1 - 6, **dadurch gekennzeichnet, dass** das vorzugsweise senkrecht zum Aufnahmeteil (111) stehende erste Montageteilstück (1121) in einem Winkel von vorzugsweise 45° gegenüber der Achse (x2) der einzulegenden Leitung (2) geneigt ist, so dass das Aufnahmeteil (111) und das zweite Montageteilstück (1122) gegeneinander verschoben sind.

8. Rohrschelle (1) nach einem der Ansprüche 1 - 7, **dadurch gekennzeichnet, dass** die beiden Enden des vorzugsweise aus Metall oder Kunststoff gefertigten Abschlusselements (12)
a) mittels Kopplungsteilen (92, 93) mit den Endstücken (1112; 1113) des Aufnahmeteils (111) verbindbar sind, oder
b) mit identischen oder unterschiedlichen Kopplungselementen (121, 122) versehen sind, die in einer von gegebenenfalls mehreren Öffnungen (33, 34) verankert und/oder an gewählten Positionen gehalten sind, die in den beiden Endstücken (1112; 1113) und/oder im Aufnahmesegment (1111) des Aufnahmeteils (111) vorgesehen sind, oder
c) mit unterschiedlichen Kopplungselementen (121, 122) versehen sind, die durch Öffnungen (33, 34), die in den beiden Endstücken (1112; 1113) und/oder im Aufnahmesegment (1111) des Aufnahmeteils (111) vorgesehen sind, hindurchgeführt und miteinander verbunden sind.

9. Rohrschelle (1) nach einem der Ansprüche 1 - 7, **dadurch gekennzeichnet, dass** das aus Metall oder Kunststoff gefertigte, vorzugsweise federelastische Abschlusselement (12, 12') am Systemelement (111) oder am Abschlussstück (5; 5') angeformt oder verschiebbar gelagert und arretierbar ist.

10. Rohrschelle (1) nach einem der Ansprüche 1 - 9, **dadurch gekennzeichnet, dass** das Aufnahmesegment (1111) zumindest teilweise elastisch ausgestaltet und dadurch an verschiedene Rohrdurchmesser weiter anpassbar ist und/oder dass das Aufnahmesegment (1111) zwei miteinander verbundene Schenkel aufweist, die gerade oder leicht nach außen gewölbt sind.

11. Rohrschelle (1) nach einem der Ansprüche 1 - 10, **dadurch gekennzeichnet, dass** das Aufnahmesegment (1111) und/oder das Abschlusselement (12) mit einem weichelastischen Lagerelement (4) versehen sind.

12. Rohrschelle (1) nach Anspruch 11, **dadurch gekennzeichnet, dass** das Lagerelement (4) in der Form eines Ärmels über das Aufnahmesegment (1111) oder das Abschlusselement (12) geführt ist oder dass das Lagerelement (4) als Montageblock ausgestaltet und gegebenenfalls mittels Ankerelementen (41) innerhalb des Aufnahmesegments (1111) und/oder des Abschlusselements (12) verankert ist und als Sitz für die installierte Leitung (2) dient.

13. Rohrschelle (1) nach einem der Ansprüche 1 - 12, **dadurch gekennzeichnet, dass** wenigstens eines der Montageteilstücke (1121; 1122; 1123) mittels nur einer Montageschraube (91) mit der Decke oder einer Wand (8) eines Gebäudes oder mit einer Montagevorrichtung (61, 62) verbunden ist.

14. Rohrschelle (1) nach einem der Ansprüche 1 - 13, **dadurch gekennzeichnet, dass** das Systemelement (11) einstückig ausgestaltet, vorzugsweise aus einem Blechstück ausgestanzt und gebogen ist.
